# EUROPEAN PATENT APPLICATION

(11) **EP 4 815 608 A2**
(43) Date of publication of application: **30.09.2026**
(21) Application number: 26198639.2
(22) Date of filing: 09.04.2020
(51) Int. Cl.: H04W 74/0808

(54) **METHODS AND APPARATUSES FOR DETERMING CHANNEL ACCESS FOR UPLINK TRANSMISSIONS**

(62) Document number(s) of the earlier application(s) in accordance with Art. 76 EPC: 20930279.3 / 4 133 870
(71) Applicant: Nokia Technologies Oy, 02610 Espoo (FI)
(72) Inventor: LUNTTILA, Timo, 02610 Espoo (FI); TAO, Tao, Shanghai, 201206 (CN); ROSA, Claudio, 8920 Randers (DK)
(74) Representative: Swindell & Pearson Limited

(57) **Abstract**

Disclosed are methods for determining channel access for uplink transmissions. An example method (200) may include determining (210) a duration of a gap between an uplink transmission of a first apparatus and a downlink transmission of a second apparatus before the uplink transmission and in a channel occupancy time of the second apparatus in a case where the uplink transmission falls within the channel occupancy time, and determining (220) at least one of a channel access type and a cyclic prefix extension for the uplink transmission according to the duration of the gap. Related apparatuses and computer readable media are also disclosed.

## Description

### TECHNICAL FIELD

Various example embodiments relate to methods and apparatuses for determining channel access for uplink transmissions.

### BACKGROUND

In addition to dynamically scheduled and configured grant uplink (UL) transmissions, periodic or semi-persistent (P/SP) UL transmissions for information such as Scheduling Request (SR), Sounding Reference Signal (SRS), Channel State Information (CSI), and Hybrid Automatic Repeat Request Acknowledge (HARQ-ACK) may also be supported in a communication system such as a New Radio (NR or 5G) system.

### SUMMARY

In a first aspect, disclosed is a method including determining a duration of a gap between an uplink transmission of a first apparatus and a downlink transmission of a second apparatus before the uplink transmission and in a channel occupancy time of the second apparatus in a case where the uplink transmission falls within the channel occupancy time, and determining at least one of a channel access type and a cyclic prefix extension for the uplink transmission according to the duration of the gap. For example, the method may be performed in the first apparatus such as a mobile device or user equipment (UE), and the second apparatus may be a base station (e.g. gNB in NR system).

In some example embodiments, the method may further include receiving information for determining the duration of the gap, and the information may include a structure of the channel occupancy time. For example, the information for determining the duration of the gap may be carried on a group common physical downlink control channel (GC-PDCCH).

In some example embodiments, the method may further include receiving information for determining the duration of the gap, and the information may include one or more of channel access type for at least one uplink transmission, gap duration for the at least one uplink transmission, a slot format indicator, channel occupancy time duration indicator, and cyclic prefix extension length for the at least one uplink transmission. For example, the information for determining the duration of the gap may be carried on GC-PDCCH.

In some example embodiments, the channel access type may be a first type in a case where the duration of the gap is less than or equal to a first value and a duration of the uplink transmission is less than a second value. For example, the first type may be Type 2C, the first value may be about 16 µs, and the second value may be about 0.584 ms.

In some example embodiments, the channel access type may be a second type in a case where the duration of the gap is equal to a third value. For example, the second type may be Type 2B and the third value may be about 16 µs.

In some example embodiments, the channel access type may be a third type in a case where the duration of the gap is at least a fourth value. For example, the third type may be Type 2A and the fourth value may be about 25 µs.

In some example embodiments, the channel access type is a fourth type in a case where the uplink transmission falls outside of the channel occupancy time. For example, the fourth type may be Type 1.

In some example embodiments, the method may further include extending a cyclic prefix of the uplink transmission to reduce the duration of the gap in a case where the duration of the gap is more than a fifth value and less than a sum of the fifth value and a duration of an Orthogonal Frequency Division Multiplexing (OFDM) symbol. For example, the fifth value may be about 16 µs.

In some example embodiments, the method may further include dropping the uplink transmission in a case where the duration of the gap is less than or equal to a sixth value and a duration of the uplink transmission is more than a seventh value. For example, the sixth value may be about 16 µs and the seventh value may be about 0.584 ms.

In some example embodiments, the method may further include receiving, for example via a radio resource control signaling, information on a configuration for time and frequency resources for the uplink transmission.

In some example embodiments, the uplink transmission may be a periodic or a semi-persistent uplink transmission.

In a second aspect, also disclosed is a method including transmitting information for determining a duration of a gap between an uplink transmission of a first apparatus and a downlink transmission of a second apparatus before the uplink transmission and in a channel occupancy time of the second apparatus in a case where the uplink transmission falls within the channel occupancy time, at least one of a channel access type and a cyclic prefix extension for the uplink transmission being determined based on the duration of the gap. For example, the method may be performed in the second apparatus such as a base station (e.g. gNB in NR system), and the first apparatus may be a UE.

In some example embodiments, the information may include a structure of the channel occupancy time. For example, the information may be transmitted via GC-PDCCH.

In some example embodiments, the information may include one or more of channel access type for at least one uplink transmission, gap duration for the at least one uplink transmission, a slot format indicator, channel occupancy time duration indicator, and cyclic prefix extension length for the at least one uplink transmission. For example, the information may be transmitted via GC-PDCCH.

In some example embodiments, the method may further include transmitting, for example via a radio resource control signaling, information on a configuration for time and frequency resources for the uplink transmission.

In some example embodiments, the uplink transmission may be a periodic or a semi-persistent uplink transmission.

In a third aspect, also disclosed is an apparatus including means for determining a duration of a gap between an uplink transmission of the apparatus and a downlink transmission of another apparatus before the uplink transmission and in a channel occupancy time of another apparatus in a case where the uplink transmission falls within the channel occupancy time, and means for determining at least one of a channel access type and a cyclic prefix extension for the uplink transmission according to the duration of the gap. For example, this apparatus may be at least a part of mobile device or UE, and the another apparatus may be at least a part of a base station.

In some example embodiments, the apparatus may further include means for receiving information for determining the duration of the gap, the information including a structure of the channel occupancy time. For example, the information for determining the duration of the gap may be carried on GC-PDCCH.

In some example embodiments, the apparatus may further include means for receiving information for determining the duration of the gap, where the information may include one or more of channel access type for at least one uplink transmission, gap duration for the at least one uplink transmission, a slot format indicator, channel occupancy time duration indicator, and cyclic prefix extension length for the at least one uplink transmission. For example, the information for determining the duration of the gap may be carried on the GC-PDCCH.

In some example embodiments, the channel access type may be a first type in a case where the duration of the gap is less than or equal to a first value and a duration of the uplink transmission is less than a second value. For example, the first type may be Type 2C, the first value may be about 16 µs, and the second value may be about 0.584 ms.

In some example embodiments, the channel access type may be a second type in a case where the duration of the gap is equal to a third value. For example, the second type may be Type 2B and the third value may be about 16 µs.

In some example embodiments, the channel access type may be a third type in a case where the duration of the gap is at least a fourth value. For example, the third type may be Type 2A and the fourth value may be about 25 µs.

In some example embodiments, the channel access type is a fourth type in a case where the uplink transmission falls outside of the channel occupancy time. For example, the fourth type may be Type 1.

In some example embodiments, the apparatus may further include means for extending a cyclic prefix of the uplink transmission to reduce the duration of the gap in a case where the duration of the gap is more than a fifth value and less than a sum of the fifth value and a duration of an OFDM symbol. For example, the fifth value may be about 16 µs.

In some example embodiments, the apparatus may further include means for dropping the uplink transmission in a case where the duration of the gap is less than or equal to a sixth value and a duration of the uplink transmission is more than a seventh value. For example, the sixth value may be about 16 µs and the seventh value may be about 0.584 ms.

In some example embodiments, the apparatus may further include means for receiving, for example via a radio resource control signaling, information on a configuration for time and frequency resources for the uplink transmission.

In some example embodiments, the uplink transmission may be a periodic or a semi-persistent uplink transmission.

In a fourth aspect, also disclosed is an apparatus including means for transmitting information for determining a duration of a gap between a downlink transmission of the apparatus in a channel occupancy time of of the apparatus and an uplink transmission of another apparatus after the downlink transmission in a case where the uplink transmission falls within the channel occupancy time, at least one of a channel access type and a cyclic prefix extension for the uplink transmission being determined based on the duration of the gap. For example, this apparatus may be at least a part of a base station (e.g. gNB in NR system), and the another apparatus may be at least a part of a UE.

In some example embodiments, the information may include a structure of the channel occupancy time. For example, the information may be transmitted via GC-PDCCH.

In some example embodiments, the information may include one or more of channel access type for at least one uplink transmission, gap duration for the at least one uplink transmission, a slot format indicator, channel occupancy time duration indicator, and cyclic prefix extension length for the at least one uplink transmission. For example, the information may be transmitted via GC-PDCCH.

In some example embodiments, the apparatus may further include means for transmitting, for example via a radio resource control signaling, information on a configuration for time and frequency resources for the uplink transmission.

In some example embodiments, the uplink transmission is a periodic or a semi-persistent uplink transmission.

In a fifth aspect, also disclosed is an apparatus including at least one processor and at least one memory. The at least one memory may include computer program code, and the at least one memory and the computer program code may be configured to, with the at least one processor, cause the apparatus to perform any method in the above first aspect. For example, this apparatus may correspond to the first apparatus in any method in the above first aspect, and may be at least a part of mobile device or UE.

In a sixth aspect, also disclosed is an apparatus including at least one processor and at least one memory. The at least one memory may include computer program code, and the at least one memory and the computer program code may be configured to, with the at least one processor, cause the apparatus to perform any method in the above second aspect. For example, this apparatus may correspond to the second apparatus in the any method in the above second aspect, and may be at least a part of a base station (e.g. gNB in NR system).

In a seventh aspect, also disclosed is a computer readable medium including program instructions for causing an apparatus to perform at least any method in the above first aspect. For example, this apparatus may correspond to the first apparatus in the any method in the above first aspect, and may be at least a part of a UE.

In an eighth aspect, also disclosed is a computer readable medium including program instructions for causing an apparatus to perform at least any method in the above second aspect. For example, this apparatus may correspond to the second apparatus in the any method in the above second aspect, and may be at least a part of a base station (e.g. gNB in NR system).

### BRIEF DESCRIPTION OF THE DRAWINGS

Some example embodiments will now be described, by way of non-limiting examples, with reference to the accompanying drawings.
FIG. 1 illustrates an example of determining the channel access type and cyclic prefix extension in an embodiment.
FIG. 2 illustrates an example method in an embodiment.
FIG. 3 illustrates an example of signal sequence in an embodiment.
FIG. 4 illustrates an example of determining the channel access type in an embodiment.
FIG. 5 illustrates an example of determining of the channel access type and cyclic prefix extension in an embodiment.
FIG. 6 illustrates an example of processing an uplink transmission in an embodiment.
FIG. 7 illustrates an example of signal sequence in an embodiment.
FIG. 8 illustrates an example method in an embodiment.
FIG. 9 illustrates an example apparatus in an embodiment.
FIG. 10 illustrates an example apparatus in an embodiment.
FIG. 11 illustrates an example apparatus in an embodiment.
FIG. 12 illustrates an example apparatus in an embodiment.

### DETAILED DESCRIPTION

Various types of channel access or Listen Before Talk (LBT) may be applied to transmissions in different cases. For example, the types of channel access or LBT supported in the 3GPP standards (for example, 3GPP TS37.213) may include Type 2C for an immediate transmission without LBT for up to a certain period (e.g. 584 µs), Type 2B for a single-shot LBT with a measurement duration (e.g. 16 µs), Type 2A for a single-shot LBT with another measurement duration (e.g. 25 µs), Type 1 for a LBT with exponential back-off, and so on.

For an UL transmission of P/SP UL transmissions of a UE, for example, the channel access type may be determined by the UE based on whether the UL transmission falls within a channel occupancy time (COT) of a base station (e.g. a gNB in the NR system).

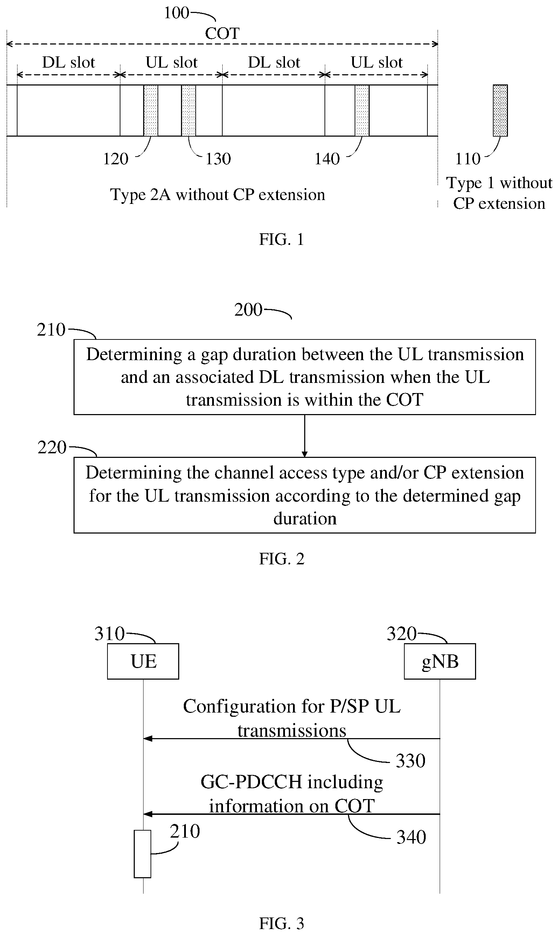

In an example, the UE may receive information on a structure of the COT of the base station via GC-PDCCH, which may include indications such as slots for uplink transmissions in the COT, slots for downlink transmissions in the COT, durations of respective slots in the COT, and so on, for example as shown in FIG. 1. In addition, the UE may receive a configuration for its P/SP UL transmissions, which may be a part of Radio Resource Control (RRC) configuration from the base station and may include information on the P/SP UL transmissions of the UE, such as periodicity, time-offset or slot-offset, various resources to be used, and so on. Then, the UE may determine whether an intended UL transmission of its P/SP UL transmissions falls within the COT according to the COT structure and information in the P/SP UL transmission configuration. For example, as shown in FIG. 1, Type 1 without cyclic prefix (CP) extension may be determined for the intended UL transmission 110 falling outside of the COT 100, and Type 2A without CP extension may be determined for the intended UP transmission 120, 130, or 140 falling within the COT 100.

In another example, the UE may apply the channel access type and/or CP extension length within or outside of the COT according to the RRC configuration from the base station. For example, according to the RRC configuration, the UE may apply a specified channel access type for the intended UL transmissions within the COT and another specified channel access type for the intended UL transmissions outside of the COT, respectively.

FIG. 2 illustrates an example method 200 for determining at least one of the channel access type and CP extension for an intended UL transmission of P/SP UL transmissions of a UE in an embodiment, which, for example, may be performed in the UE.

As shown in FIG. 2, the example method 200 may include a step 210 of determining a duration of a gap between an UL transmission of a first apparatus (e.g. the UE or a part of the UE) and a downlink (DL) transmission of a second apparatus (e.g. the base station or a part of the base station) before the UL transmission in a COT of the second apparatus in a case where the UL transmission falls within the COT, and a step 220 of determining at least one of a channel access type and a CP extension for the UL transmission according to the duration of the gap.

Through the example method 200, for example, the first apparatus may be allowed for making use of different types of channel access or LBT (i.e. switching among different types) when the intended UL transmission is within the COT, and a dynamic configuration of the CP extension may also be allowed, so that the P/SP UL transmissions of the UE may be adaptable dynamically for different use cases. Thus, for example, the UE may be enabled to use aggressive/efficient channel access scheme when transmitting P/SP UL signals.

Moreover, through the example method 200, for example, some or all UEs may apply the substantially same channel access mechanism, so that Frequency Division Multiplexing of UL transmissions of different UEs may be simplified. Further, for example, the UE may select suitable channel access type and CP extension adaptively, so that additional Layer 1 control signalling may be avoided.

In some embodiments, the information used in the step 210 for determining the duration of the gap may include the structure of COT of the base station. For example, the UE may receive such information via GC-PDCCH.

For example, as shown in FIG. 3, the UE 310 (the first apparatus in the example method 200) may receive a configuration 330 for its P/SP UL transmissions from the base station 320 (the second apparatus in the example method 200). For example, the configuration 330 may be a part of RRC configuration from the base station 320, and may include information such as the periodicity and time-offset (e.g. slot-offset) of the P/SP UL transmissions, as well as the time-, and/or frequency-, and/or code-domain resources to be used for the P/SP UL transmissions. The UE 310 may also detect GC-PUCCH 340 (for example, with Downlink Control Information Format 2_0) from the base station 320, before or after or in parallel with the reception or process of the configuration 330, so as to determine the structure of the COT of the base station 320.

Then, for any intended UL transmission of P/SP UL transmissions of the UE 310, for example, in the step 210 or an additional step of the example method 200, or even before the execution of the example method 200, the UE 310 may utilize the information derived from the configuration 330 and/or the structure of the COT derived from the information carried by the GC-PDCCH 340, to determine (1) whether the intended UL transmission falls within the COT of the base station 320, and (2) the position of the intended UL transmission with respect to a DL transmission e.g. the closest DL transmission preceding the intended UL transmission in the COT), that is, the duration of the gap between the intended UL transmission and the last DL transmission.

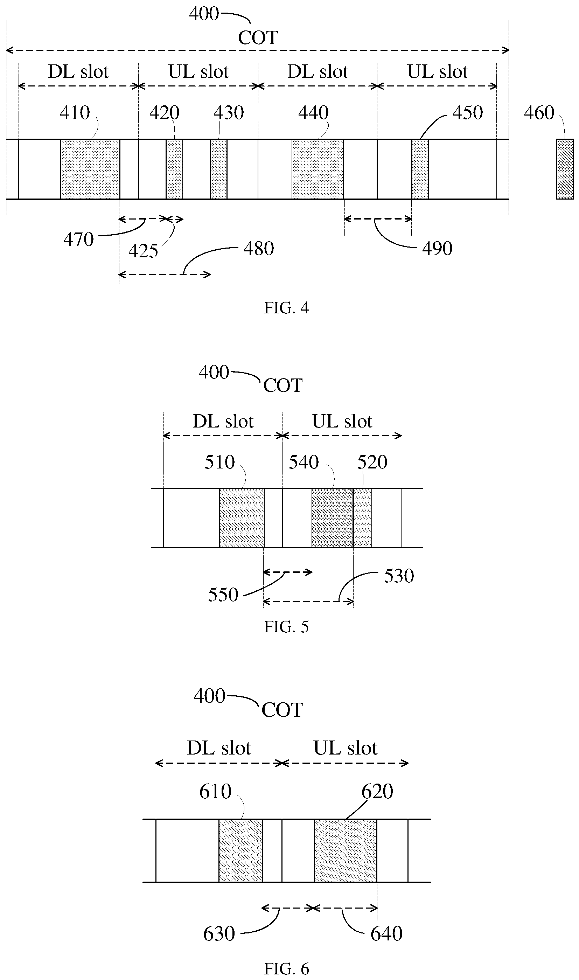

For example, based on the detected GC-PDCCH 340, the UE 310 may determine the structure of COT 400 of the base station 320, as shown in FIG. 4. Further, for example in connection with the configuration 330 (e.g., the periodicity and time-offset included in or derived from the configuration 330), the UE 310 may determine whether an intended UL transmission is within the COT 400. For example, as shown in FIG. 4, it may be determined that the intended UL transmission 420, 430, or 450 falls within the COT 400, and the intended UL transmission 460 falls outside of the COT 400.

Further, the UE 310 may determine the position of the intended UL transmission with respect to a DL transmission before the intended UL transmission, for example based on the structure of COT 400 and the configuration 330. For example, for the intended UL transmission 420, a duration of gap (or a gap duration, or a distance in time) 470 between the intended UL transmission 420 and the DL transmission 410, for example from the end of the DL transmission 410 (e.g. the last DL transmission in the DL slot before the UL transmission 420) to the start of the intended UL transmission 420, may be determined, where the DL transmission 410 in the DL slot may be adjacent to and before the UL slot including the intended UL transmission 420 and may be the closest DL transmission preceding the intended UL transmission 420. Similarly, for the intended UL transmission 430, a duration of gap 480 between the intended UL transmission 430 and the DL transmission 410 may be determined, and for the intended UL transmission 450, a duration of gap 490 between the intended UL transmission 450 and the DL transmission 440 may be determined.

It is appreciated that the manner of determining whether the intended UL transmission falls within the COT and the duration gap for an intended UL transmission are not limited to the above examples. In various embodiments, any suitable manner and suitable information may be utilized to determine whether an intended UL transmission of P/SP UL transmissions of the UE falls in the base station initiated channel occupancy, and to determine the gap duration for any intended UL transmission of P/SP UL transmissions of the UE. More examples will be described hereafter.

As shown in FIG. 4, for different intended UL transmissions of the UE 310, the determined gap durations may be different. Then, in the step 220 of the example method 200, different types of channel access or LBT and/or different processes may be determined for an intended UL transmission based on different gap durations.

In some embodiments, for an UL transmission of P/SP UL transmissions of the UE, the channel access type may be determined as a first type (for example, Type 2C) in a case where the duration of the gap is less than or equal to a first value (for example, a value about 16 µs) and a duration of the UL transmission is less than a second value (for example, a value about 0.584 ms). For example, for the intended UL transmission 420 in FIG. 4, the determined gap duration 470 is less than or equal to 16 µs and the duration 425 of the intended UL transmission 420 is less than 0.584 ms. Then, the type of channel access or LBT for the the intended UL transmission 420 may be determined as Type 2C.

In some embodiments, for an UL transmission of P/SP UL transmissions of the UE, the channel access type may be determined as a second type (for example, Type 2B) in a case where the duration of the gap is equal to a third value (for example, a value about 16 µs). For example, if the determined gap duration 490 for the intended UL transmission 450 in FIG. 4 is equal to 16 µs, the UE 310 may use Type 2B UL channel access procedure (with 16 µs measurement) for the intended UL transmission 450.

In some embodiments, for an UL transmission of P/SP UL transmissions of the UE, the channel access type may be determined as a third type (for example, Type 2A) in a case where the duration of the gap is at least a fourth value (for example, a value about 25 µs). For example, if the determined gap duration 480 for the intended UL transmission 430 in FIG. 4 is at least 25 µs, the UE 310 may use Type 2A UL channel access procedure (with 25 µs measurement) for the intended UL transmission 430.

In some embodiments, for an UL transmission of P/SP UL transmissions of the UE, the channel access type may be determined as a fourth type (for example, Type 1) in a case where the UL transmission falls outside of the COT. For example, for the intended UL transmission 460 outside of the COT 400 in FIG. 4, the UE 310 may use Type 1 UL channel access procedure. In this case, for example, CP extension may be not used prior to the intended UL transmission 460. In another example, CP extension may be used prior to the intended UL transmission 460.

In some embodiments, for an UL transmission of P/SP UL transmissions of the UE, the CP of the UL transmission may be extended to reduce the duration of the gap in a case where the duration of the gap is more than a fifth value (for example, a value about 16 µs) and less than a sum of the fifth value and a duration of an Orthogonal Frequency Division Multiplexing (OFDM) symbol. Thus, the duration of the gap may be reduced effectively by the CP extension to be an expected length, for example 16 µs, so as to allow for the UE to switch the channel access type for the UL transmission from the above third type to the above first type or the above second type.

For example, as shown in FIG. 5, the UE 310 determines that the gap duration 530 between an intended UL transmission 520 within the COT 400 and a DL transmission 510 before the intended UL transmission 520 in the COT 400 is in a range from 16 µs to 25 µs. Then, the UE 310 may prolong its CP with the part 540, so that the new gap duration 550 between the extended UL transmission (including the parts 520 and 540) and the DL transmission 510 may be reduced to 16 µs or less. Further, for example, the UE 310 may use the above first type (e.g. Type 2C) if the gap duration 550 is less than or equal to 16 µs and the duration of the extended UL transmission (including the parts 520 and 540) is less than 0.584 ms; or, for example, the UE 310 may use the above second type (e.g. Type 2B) if the gap duration 550 is equal to 16 µs.

Similarly, if the gap duration 530 is larger than 25 µs, the UE 310 may prolong its CP with the part 540, so that the new gap duration 550 between the extended UL transmission (including the parts 520 and 540) and the DL transmission 510 may be reduced to 25 µs, or to 16 µs or less. Then, the UE 310 may use one of the above first type (e.g. Type 2C), the second type (e.g. Type 2B), and the third type (e.g. Type 2A), depending on the new gap duration 550 and the duration of the extended UL transmission (including the parts 520 and 540).

In some embodiments, for an UL transmission of P/SP UL transmissions of the UE, the UL transmission may be dropped in a case where the duration of the gap is less than or equal to a sixth value (for example, a value about 16 µs) and a duration of the UL transmission is more than a seventh value (for example, a value about 0.584 ms).

For example, as shown in FIG. 6, the UE 310 determines that the gap duration 630 between an intended UL transmission 620 within the COT 400 and a DL transmission 610 before the intended UL transmission 620 in the COT 400 is less than or equal to 16 µs, and the duration 640 of the intended UL transmission 620 is more than 0.584 ms. Then, the UE 310 may drop the UL transmission 620.

As described above with several illustrated but not limited examples, through the example method 200, for example, the UE can make use of different types of channel access or LBT (i.e. switching among different types) when the intended UL transmission is within the COT, and a dynamic configuration of the CP extension may also be allowed, so that the P/SP UL transmissions of the UE may be adaptable dynamically for different use cases. Thus, for example, the UE may be enabled to use aggressive/efficient channel access scheme when transmitting P/SP UL signals. Moreover, through the example method 200, for example, some or all UEs may apply the substantially same channel access mechanism, so that Frequency Division Multiplexing of UL transmissions of different UEs may be simplified. Further, through the example method 200, the UE may select suitable channel access type and CP extension adaptively, so that additional Layer 1 control signalling may be avoided.

It is appreciated that, considering tolerances, various values mentioned above such as the above first value and second value may be a value in a value range based on a reference value (e.g. 16 µs, or 25 µs, or 0.584 ms). For example, "being less than or equal to 16 µs" may also mean "being less than or equal to a value in a value range including 16 µs and considering tolerances or predetermined thresholds/parameters", and "a value about 16 µs" may mean for example 16 µs, or a value about 16 µs such as 15.985 µs and 16.101 µs, or other reasonable value in a value range including 16 µs and considering tolerances or predetermined threshold/parameters.

It is also appreciated that the example method 200 is not limited to any of the above examples or embodiments. For example, the example method may further include receiving, for example via a RRC signaling, information on a configuration for time and frequency resources for the uplink transmission, for example as shown in FIG. 3.

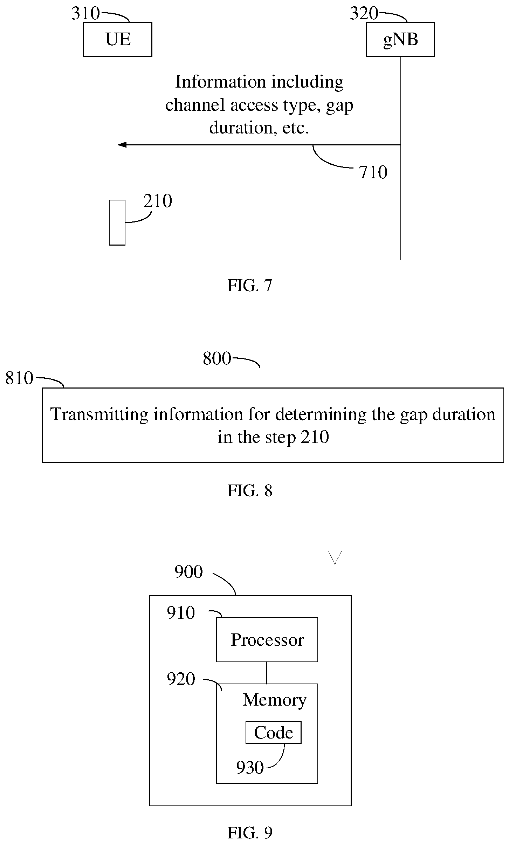

For example, as shown in FIG. 7, in addition to or in lieu of the configuration 330 and information 340 on the structure COT as shown in FIG. 3, the UE 310 may receive, from the base station 320, information 710 for determining the duration of the gap. In various embodiments, the information 710 may include, but is not limited to, one or more of channel access type for at least one uplink transmission, gap duration for the at least one uplink transmission, a slot format indicator, channel occupancy time duration indicator, cyclic prefix extension length for the at least one uplink transmission, and so on, for any one or more of the intended UL transmissions of the P/SP UL transmissions of the UE 310. In various embodiments, such information 710 may be carried via GC-PDCCH, or other one or more suitable channels or signals, and in any suitable format.

For example, for the intended UL transmissions 420, 430, and 450 as shown in FIG. 4, the UE 310 may receive information on the channel access type for the UL transmission 420, the channel access type for the UL transmission 430, the gap duration 490 for the UL transmission 450, the length of the CP extension to be applied to the UL transmission 430, and the length of the CP extension to be applied to the UL transmission 490, and the like. Then, for example, the UE 310 may determine the channel access types for the UL transmissions 420 and 430 directly from the information 710, and may obtain the gap duration 490 for the UL transmission 450 from the information 710 and then determine the channel access types for the UL transmissions 490 based on the obtained gap duration 490, and the like.

Thus, for example, the UE may determine the channel access type or LBT type by parsing the received information, or the determination of the duration gap or CP extension for an intended UL transmission may be simplified. For example, it may be useful to include gap duration for one or more intended UL transmissions (e.g. between the last DL transmission of the ongoing DL burst in a COT and the intended UL transmission) may be useful, for example, in a case where the base station fills part of the gap using a partial OFDM symbol transmission to create a gap of a specific duration.

It is appreciated that any of the above examples or embodiments may be combined. For example, for a first intended UL transmission and a second intended UL transmission, the UE may detect GC-PDCCH to determine the structure of COT and then determine the duration gap and in turn at least one of the channel access type / LBT type and CP extension, similarly to the procedure as shown in FIG. 3, while receiving information including a channel access type for a third UL transmission and a gap duration for a fourth UL transmission, and then determining the duration gap and in turn at least one of the channel access type / LBT type and CP extension for the third UL transmission and the fourth UL transmission, and the like.

Corresponding to the example method 200, FIG. 8 illustrates an example method 800 which may be performed in the base station, for example the base station 320 in FIG. 3 or 7.

As shown in FIG. 8, the example method 800 may include a step of 810 of transmitting information for determining a duration of a gap between an UL transmission of the first apparatus (e.g. the above UE 310 or a part of the above UE 310) and a DL transmission of the second apparatus (e.g. the above base station 320 or a part of the above base station 320) before the UL transmission in a COT of the second apparatus in a case where the UL transmission falls within the COT, i.e. the gap duration in the step 210 of the example method 200. Then, at least one of a channel access type and a cyclic prefix extension for the UL transmission may be determined based on the duration of the gap.

In some embodiments, for example as shown in FIG. 3, the information transmitted in the step 810 may include the structure of the COT of the base station. In some embodiments, for example as shown in FIG. 7, the information transmitted in the step 810 may include one or more of channel access type for at least one uplink transmission, gap duration for the at least one uplink transmission, a slot format indicator, channel occupancy time duration indicator, and cyclic prefix extension length for the at least one uplink transmission. In various embodiments, in the step 810, the information may be transmitted via GC-PDCCH or any other one or more suitable channels or signals. Further, the information transmitted in the step 810 or a further step of the example 800 may include, for example, information on a configuration for time and frequency resources for the uplink transmission via a RRC signaling.

FIG. 9 illustrates an example apparatus 900 for determining at least one of the channel access type and CP extension for an intended UL transmission of P/SP UL transmissions of a UE in an embodiment, which, for example, may be at least a part of the UE (e.g. the UE 310 in FIG. 3 or 7).

As shown in FIG. 9, the example apparatus 900 may include at least one processor 910 and at least one memory 920 that may include computer program code 930. The at least one memory 920 and the computer program code 930 may be configured to, with the at least one processor 910, cause the apparatus 900 at least to perform at least the example method 200 described above, wherein, for example, the apparatus 900 may be the first apparatus in the example method 200.

In various example embodiments, the at least one processor 910 in the example apparatus 900 may include, but not limited to, at least one hardware processor, including at least one microprocessor such as a central processing unit (CPU), a portion of at least one hardware processor, and any other suitable dedicated processor such as those developed based on for example Field Programmable Gate Array (FPGA) and Application Specific Integrated Circuit (ASIC). Further, the at least one processor 910 may also include at least one other circuitry or element not shown in FIG. 9.

In various example embodiments, the at least one memory 920 in the example apparatus 900 may include at least one storage medium in various forms, such as a volatile memory and/or a non-volatile memory. The volatile memory may include, but not limited to, for example, a random-access memory (RAM), a cache, and so on. The non-volatile memory may include, but not limited to, for example, a read only memory (ROM), a hard disk, a flash memory, and so on. Further, the at least memory 920 may include, but are not limited to, an electric, a magnetic, an optical, an electromagnetic, an infrared, or a semiconductor system, apparatus, or device or any combination of the above.

Further, in various example embodiments, the example apparatus 900 may also include at least one other circuitry, element, and interface, for example at least one I/O interface, at least one antenna element, and the like.

In various example embodiments, the circuitries, parts, elements, and interfaces in the example apparatus 900, including the at least one processor 910 and the at least one memory 920, may be coupled together via any suitable connections including, but not limited to, buses, crossbars, wiring and/or wireless lines, in any suitable ways, for example electrically, magnetically, optically, electromagnetically, and the like.

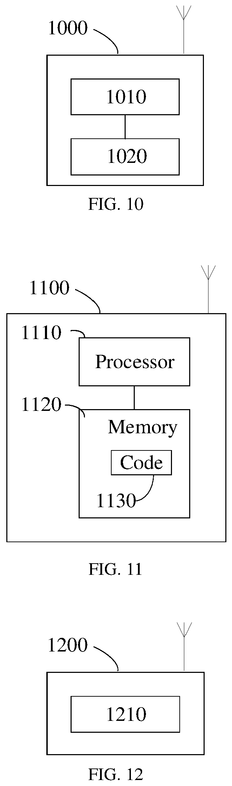

The structure of the apparatus on the side of the UE 310 is not limited to the above example apparatus 900. FIG. 10 illustrates another example apparatus 1000 for determining at least one of the channel access type and CP extension for an intended UL transmission of P/SP UL transmissions of a UE in an embodiment, which, for example, may be at least a part of the UE (e.g. the UE 310 in FIG. 3 or 7).

As shown in FIG. 10, the example apparatus 1000 may include means 1010 for performing the step 210 of the example method 200 and means 1020 for performing the step 220 of the example method 200. In one or more another example embodiments, at least one I/O interface, at least one antenna element, and the like may also be included in the example apparatus 1000. For example, the example apparatus 1000 may be the first apparatus in the example method 200.

In some example embodiments, examples of means 1010 and 1020 may include circuitries. For example, an example of means 1010 may include a circuitry configured to perform the step 210 of the example method 200, and an example of means 1020 may include a circuitry configured to perform the step 220 of the example method 200. In some example embodiments, examples of means may also include software modules and any other suitable function entities.

In some embodiments, the example apparatus 1000 may further include one or more additional means for receiving the above information for determining the duration of the gap, for extending a cyclic prefix of the uplink transmission in some case, and/or for dropping the uplink transmission in some case.

The term "circuitry" throughout this disclosure may refer to one or more or all of the following: (a) hardware-only circuit implementations (such as implementations in only analog and/or digital circuitry); (b) combinations of hardware circuits and software, such as (as applicable) (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to one or all uses of this term in this disclosure, including in any claims. As a further example, as used in this disclosure, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in server, a cellular network device, or other computing or network device.

FIG. 11 illustrates an example apparatus 1100 which, for example, may be at least a part of the base station, for example the base station 320 in FIG. 3 or 7.

As shown in FIG. 11, the example apparatus 1100 may include at least one processor 1110 and at least one memory 1120 that may include computer program code 1130. The at least one memory 1120 and the computer program code 1130 may be configured to, with the at least one processor 1110, cause the apparatus 1100 at least to perform at least the example method 800 described above. For example, the apparatus 1100 may be the second apparatus in the example method 800.

In various example embodiments, the at least one processor 1110 in the example apparatus 1100 may include, but not limited to, at least one hardware processor, including at least one microprocessor such as a CPU, a portion of at least one hardware processor, and any other suitable dedicated processor such as those developed based on for example FPGA and ASIC. Further, the at least one processor 1110 may also include at least one other circuitry or element not shown in FIG. 11.

In various example embodiments, the at least one memory 1120 in the example apparatus 1100 may include at least one storage medium in various forms, such as a volatile memory and/or a non-volatile memory. The volatile memory may include, but not limited to, for example, a RAM, a cache, and so on. The non-volatile memory may include, but not limited to, for example, a ROM, a hard disk, a flash memory, and so on. Further, the at least memory 1120 may include, but are not limited to, an electric, a magnetic, an optical, an electromagnetic, an infrared, or a semiconductor system, apparatus, or device or any combination of the above.

Further, in various example embodiments, the example apparatus 1100 may also include at least one other circuitry, element, and interface, for example at least one I/O interface, at least one antenna element, and the like.

In various example embodiments, the circuitries, parts, elements, and interfaces in the example apparatus 1100, including the at least one processor 1110 and the at least one memory 1120, may be coupled together via any suitable connections including, but not limited to, buses, crossbars, wiring and/or wireless lines, in any suitable ways, for example electrically, magnetically, optically, electromagnetically, and the like.

FIG. 12 illustrates another example apparatus 1200 which, for example, may be at least a part of the base station, for example the base station 320 in FIG. 3 or 7.

As shown in FIG. 12, the example apparatus 1200 may include means 1210 for performing the step 810 of the example method 800. In one or more another example embodiments, the example apparatus 1100 may further include at least one I/O interface, at least one antenna element, and the like. For example, the example apparatus may be the second apparatus in the example method 800.

In various example embodiments, examples of means 1210 may include circuitries. For example, an example of means 1210 may include a circuitry configured to perform the step 810 of the example method 800. In some example embodiments, examples of means may also include software modules and any other suitable function entities.

Another example embodiment may relate to computer program codes or instructions which may cause an apparatus to perform at least respective methods described above, such as computer program codes or instructions causing a UE to perform at least the above example method 200, and computer program codes or instructions causing a base station to perform at least the above example method 800.

Another example embodiment may be related to a computer readable medium having such computer program codes or instructions stored thereon. In various example embodiments, such a computer readable medium may include at least one storage medium in various forms such as a volatile memory and/or a non-volatile memory. The volatile memory may include, but not limited to, for example, a RAM, a cache, and so on. The non-volatile memory may include, but not limited to, a ROM, a hard disk, a flash memory, and so on.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment.

While some example embodiments have been described, these embodiments have been presented by way of example, and are not intended to limit the scope of the disclosure. Indeed, the apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. At least one of these blocks may be implemented in a variety of different ways. The order of these blocks may also be changed. Any suitable combination of the elements and acts of the various embodiments described above can be combined to provide further embodiments. The accompanying claims and their equivalents are intended to cover such forms or modifications as would fall within the scope and spirit of the disclosure.

### SUPPORTING PARAGRAPHS

There now follows different sets, A1 to A8, of numbered paragraphs. The first paragraph in each set of paragraphs could form the basis for an independent claim. Features present in one set of paragraphs can be combined with features present in other sets of paragraphs mutatis mutandis.

### A1

Paragraph 1. A method (200) comprising:
determining (210) a duration of a gap between an uplink transmission of a first apparatus and a downlink transmission of a second apparatus before the uplink transmission and in a channel occupancy time of the second apparatus in a case where the uplink transmission falls within the channel occupancy time; and
determining (220) at least one of a channel access type and a cyclic prefix extension for the uplink transmission according to the duration of the gap.

Paragraph 2. The method (200) of paragraph 1 further comprising: receiving information (340) for determining the duration of the gap, the information (340) including a structure of the channel occupancy time.

Paragraph 3. The method (200) of paragraph 1 or 2 further comprising: receiving information (710) for determining the duration of the gap, the information (710) including at least one of channel access type for at least one uplink transmission, gap duration for the at least one uplink transmission, a slot format indicator, channel occupancy time duration indicator, and cyclic prefix extension length for the at least one uplink transmission.

Paragraph 4. The method (200) of paragraph 2 or 3 wherein the information is carried on a group common physical downlink control channel.

Paragraph 5. The method (200) of any of paragraphs 1 to 4 wherein the channel access type is a first type in a case where the duration of the gap is less than or equal to a first value and a duration of the uplink transmission is less than a second value.

Paragraph 6. The method (200) of paragraph 5 wherein the first type is Type 2C, the first value is about 16 µs, and the second value is about 0.584 ms.

Paragraph 7. The method (200) of any of paragraphs 1 to 4 wherein the channel access type is a second type in a case where the duration of the gap is equal to a third value.

Paragraph 8. The method (200) of paragraph 7 wherein the second type is Type 2B and the third value is about 16 µs.

Paragraph 9. The method (200) of any of paragraph 1 to 4 wherein the channel access type is a third type in a case where the duration of the gap is at least a fourth value.

Paragraph 10. The method (200) of paragraph 9 wherein the third type is Type 2A and the fourth value is about 25 µs.

Paragraph 11. The method (200) of any of paragraphs 1 to 4 wherein the channel access type is a fourth type in a case where the uplink transmission falls outside of the channel occupancy time.

Paragraph 12. The method (200) of paragraph 11 wherein the fourth type is Type 1.

Paragraph 13. The method (200) of any of paragraphs 1 to 4 further comprising: extending a cyclic prefix of the uplink transmission to reduce the duration of the gap in a case where the duration of the gap is more than a fifth value and less than a sum of the fifth value and a duration of an Orthogonal Frequency Division Multiplexing symbol.

Paragraph 14. The method (200) of paragraph 13 wherein the fifth value is about 16 µs.

Paragraph 15. The method (200) of any of paragraphs 1 to 4 further comprising: dropping the uplink transmission in a case where the duration of the gap is less than or equal to a sixth value and a duration of the uplink transmission is more than a seventh value.

Paragraph 16. The method (200) of paragraph 15 wherein the sixth value is about 16 µs and the seventh value is about 0.584 ms.

Paragraph 17. The method of any of paragraphs 1 to 16 further comprising: receiving, via a radio resource control signaling, information on a configuration for time and frequency resources for the uplink transmission.

Paragraph 18. The method of any of paragraphs 1 to 17 wherein the uplink transmission is a periodic or a semi-persistent uplink transmission.

### A2

Paragraph 1. A method (800) comprising:
transmitting (810) information for determining a duration of a gap between an uplink transmission of a first apparatus and a downlink transmission of a second apparatus before the uplink transmission and in a channel occupancy time of the second apparatus in a case where the uplink transmission falls within the channel occupancy time, at least one of a channel access type and a cyclic prefix extension for the uplink transmission being determined based on the duration of the gap.

Paragraph 2. The method (800) of paragraph 1 wherein the information includes a structure of the channel occupancy time.

Paragraph 3. The method (800) of paragraph 1 or 2 wherein the information includes at least one of channel access type for at least one uplink transmission, gap duration for the at least one uplink transmission, a slot format indicator, channel occupancy time duration indicator, and cyclic prefix extension length for the at least one uplink transmission.

Paragraph 4. The method (800) of paragraph 2 or 3 wherein the information is transmitted via a group common physical downlink control channel.

Paragraph 5. The method (800) of any of paragraphs 1 to 4 further comprising: transmitting, via a radio resource control signaling, information on a configuration for time and frequency resources for the uplink transmission.

Paragraph 6. The method (800) of any of paragraphs 1 to 5 wherein the uplink transmission is a periodic or a semi-persistent uplink transmission.

### A3

Paragraph 1. An apparatus (1000) comprising:
means (1010) for determining a duration of a gap between an uplink transmission of the apparatus (1000) and a downlink transmission of another apparatus before the uplink transmission and in a channel occupancy time of the another apparatus in a case where the uplink transmission falls within the channel occupancy time; and
means (1020) for determining at least one of a channel access type and a cyclic prefix extension for the uplink transmission according to the duration of the gap.

Paragraph 2. The apparatus (1000) of paragraph 1 further comprising: means for receiving information for determining the duration of the gap, the information including a structure of the channel occupancy time.

Paragraph 3. The apparatus (1000) of paragraph 1 or 2 further comprising: means for receiving information for determining the duration of the gap, the information including at least one of channel access type for at least one uplink transmission, gap duration for the at least one uplink transmission, a slot format indicator, channel occupancy time duration indicator, and cyclic prefix extension length for the at least one uplink transmission.

Paragraph 4. The apparatus (1000) of paragraph 2 or 3 wherein the information is carried on a group common physical downlink control channel.

Paragraph 5. The apparatus (1000) of any of paragraphs 1 to 4 wherein the channel access type is a first type in a case where the duration of the gap is less than or equal to a first value and a duration of the uplink transmission is less than a second value.

Paragraph 6. The apparatus (1000) of paragraph 5 wherein the first type is Type 2C, the first value is about on 16 µs, and the second value is about on 0.584 ms.

Paragraph 7. The apparatus (1000) of any of paragraphs 1 to 4 wherein the channel access type is a second type in a case where the duration of the gap is equal to a third value.

Paragraph 8. The apparatus (1000) of paragraph 7 wherein the second type is Type 2B and the third value is about 16 µs.

Paragraph 9. The apparatus (1000) of any of paragraph 1 to 4 wherein the channel access type is a third type in a case where the duration of the gap is at least a fourth value.

Paragraph 10. The apparatus (1000) of paragraph 9 wherein the third type is Type 2A and the fourth value is about 25 µs.

Paragraph 11. The apparatus (1000) of any of paragraphs 1 to 4 wherein the channel access type is a fourth type in a case where the uplink transmission falls outside of the channel occupancy time.

Paragraph 12. The apparatus (1000) of paragraph 11 wherein the fourth type is Type 1.

Paragraph 13. The apparatus (1000) of any of paragraphs 1 to 4 further comprising: means for extending a cyclic prefix of the uplink transmission to reduce the duration of the gap in a case where the duration of the gap is more than a fifth value and less than a sum of the fifth value and a duration of an Orthogonal Frequency Division Multiplexing symbol.

Paragraph 14. The apparatus (1000) of paragraph 13 wherein the fifth value is about 16 µs.

Paragraph 15. The apparatus (1000) of any of paragraphs 1 to 4 further comprising: means for dropping the uplink transmission in a case where the duration of the gap is less than or equal to a sixth value and a duration of the uplink transmission is more than a seventh value.

Paragraph 16 The apparatus (1000) of paragraph 15 wherein the sixth value is about 16 µs and the seventh value is about 0.584 ms.

Paragraph 17. The apparatus (1000) of any of paragraphs 1 to 16 further comprising: means for receiving, via a radio resource control signaling, information on a configuration for time and frequency resources for the uplink transmission.

Paragraph 18. The apparatus (1000) of any of paragraphs 1 to 17 wherein the uplink transmission is a periodic or a semi-persistent uplink transmission.

Paragraph 19 The apparatus (1000) of any of paragraphs 1 to 18 wherein the apparatus is at least a part of a mobile device.

### A4

Paragraph 1. An apparatus (1200) comprising:
means (1210) for transmitting information for determining a duration of a gap between a downlink transmission of the apparatus (1200) in a channel occupancy time of the apparatus and an uplink transmission of another apparatus after the downlink transmission in a case where the uplink transmission falls within the channel occupancy time, at least one of a channel access type and a cyclic prefix extension for the uplink transmission being determined based on the duration of the gap.

Paragraph 2. The apparatus (1200) of paragraph 1 wherein the information includes a structure of the channel occupancy time.

Paragraph 3. The apparatus (1200) of paragraph 1 or 2 wherein the information includes at least one of channel access type for at least one uplink transmission, gap duration for the at least one uplink transmission, a slot format indicator, channel occupancy time duration indicator, and cyclic prefix extension length for the at least one uplink transmission.

Paragraph 4. The apparatus (1200) of paragraph 2 or 3 wherein the information is transmitted via a group common physical downlink control channel.

Paragraph 5 The apparatus (1200) of any of paragraphs 1 to 4 further comprising: means for transmitting, via a radio resource control signaling, information on a configuration for time and frequency resources for the uplink transmission.

Paragraph 6. The apparatus (1200) of any of paragraphs 1 to 5 wherein the uplink transmission is a periodic or a semi-persistent uplink transmission.

Paragraph 7. The apparatus of any of paragraphs 1 to 6 wherein the apparatus is at least part of a base station.

### A5

Paragraph 1. An apparatus (900) comprising:
at least one processor (910); and
at least one memory (920) including computer program code (930), the at least one memory (920) and the computer program code (930) being configured to, with the at least one processor (910), cause the apparatus (900) to perform:
   determining a duration of a gap between an uplink transmission of the apparatus (900) and a downlink transmission of another apparatus before the uplink transmission and in a channel occupancy time of the another apparatus in a case where the uplink transmission falls within the channel occupancy time; and
   determining at least one of a channel access type and a cyclic prefix extension for the uplink transmission according to the duration of the gap.

Paragraph 2. The apparatus (900) of paragraph 1 wherein the at least one memory (920) and the computer program code (930) are configured to, with the at least one processor (910), cause the apparatus (900) to further perform receiving information for determining the duration of the gap, the information (340) including a structure of the channel occupancy time.

Paragraph 3. The apparatus (900) of paragraph 1 or 2 wherein the at least one memory (920) and the computer program code (930) are configured to, with the at least one processor (910), cause the apparatus (900) to further perform receiving information for determining the duration of the gap, the information including at least one of channel access type for at least one uplink transmission, gap duration for the at least one uplink transmission, a slot format indicator, channel occupancy time duration indicator, and cyclic prefix extension length for the at least one uplink transmission.

Paragraph 4. The apparatus (900) of paragraph 2 or 3 wherein the information is carried on a group common physical downlink control channel.

Paragraph 5. The apparatus (900) of any of paragraphs 1 to 4 wherein the channel access type is a first type in a case where the duration of the gap is less than or equal to a first value and a duration of the uplink transmission is less than a second value.

Paragraph 6. The apparatus (900) of paragraph 5 wherein the first type is Type 2C, the first value is about 16 µs, and the second value is about 0.584 ms.

Paragraph 7. The apparatus (900) of any of paragraphs 1 to 4 wherein the channel access type is a second type in a case where the duration of the gap is equal to a third value.

Paragraph 8. The apparatus (900) of paragraph 7 wherein the second type is Type 2B and the third value is about 16 µs.

Paragraph 9. The apparatus (900) of any of paragraph 1 to 4 wherein the channel access type is a third type in a case where the duration of the gap is at least a fourth value.

Paragraph 10. The apparatus (900) of paragraph 9 wherein the third type is Type 2A and the fourth value is about 25 µs.

Paragraph 11. The apparatus (900) of any of paragraphs 1 to 4 wherein the channel access type is a fourth type in a case where the uplink transmission falls outside of the channel occupancy time.

Paragraph 12. The apparatus (900) of paragraph 11 wherein the fourth type is Type 1.

Paragraph 13. The apparatus (900) of any of paragraphs 1 to 4 wherein the at least one memory (920) and the computer program code (930) are configured to, with the at least one processor (910), cause the apparatus (900) to further perform extending a cyclic prefix of the uplink transmission to reduce the duration of the gap in a case where the duration of the gap is more than a fifth value and less than a sum of the fifth value and a duration of an Orthogonal Frequency Division Multiplexing symbol.

Paragraph 14. The apparatus (900) of paragraph 13 wherein the fifth value is about 16 µs.

Paragraph 15. The apparatus (900) of any of paragraphs 1 to 4 wherein the at least one memory (920) and the computer program code (930) are configured to, with the at least one processor (910), cause the apparatus (900) to further perform dropping the uplink transmission in a case where the duration of the gap is less than or equal to a sixth value and a duration of the uplink transmission is more than a seventh value.

Paragraph 16. The apparatus (900) of paragraph 15 wherein the sixth value is about 16 µs and the seventh value is about 0.584 ms.

Paragraph 17. The apparatus (900) of any of paragraphs 1 to 16 wherein the at least one memory (920) and the computer program code (930) are configured to, with the at least one processor (910), cause the apparatus (900) to further perform receiving, via a radio resource control signaling, information on a configuration for time and frequency resources for the uplink transmission.

Paragraph 18. The apparatus (900) of any of paragraphs 1 to17 wherein the uplink transmission is a periodic or a semi-persistent uplink transmission.

Paragraph 19. The apparatus of any of paragraphs 1 to 18 wherein the apparatus is at least a part of a mobile device.

### A6

Paragraph 1. An apparatus (1100) comprising:
at least one processor (1110); and
at least one memory (1120) including computer program code (1130), the at least one memory (1120) and the computer program code (1130) being configured to, with the at least one processor (1110), cause the apparatus (1110) to perform
   transmitting information for determining a duration of a gap between a downlink transmission of the apparatus (1100) in a channel occupancy time of the apparatus (1100) and an uplink transmission of another apparatus after the downlink transmission in a case where the uplink transmission falls within the channel occupancy time, at least one of a channel access type and a cyclic prefix extension for the uplink transmission being determined based on the duration of the gap.

Paragraph 2. The apparatus (1100) of paragraph 1 wherein the information includes a structure of the channel occupancy time.

Paragraph 3. The apparatus (1100) of paragraph 1 or 2 wherein the information includes at least one of channel access type for at least one uplink transmission, gap duration for the at least one uplink transmission, a slot format indicator, channel occupancy time duration indicator, and cyclic prefix extension length for the at least one uplink transmission.

Paragraph 4. The apparatus (1100) of paragraph 2 or 3 wherein the information is transmitted via a group common physical downlink control channel.

Paragraph 5. The apparatus (1100) of any of paragraphs 1 to 4 wherein the at least one memory (1120) and the computer program code (1130) is configured to, with the at least one processor (1110), cause the apparatus (1110) to further perform transmitting, via a radio resource control signaling, information on a configuration for time and frequency resources for the uplink transmission.

Paragraph 6. The apparatus (1100) of any of paragraphs 1 to 5 wherein the uplink transmission is a periodic or a semi-persistent uplink transmission.

Paragraph 7. The apparatus (1100) of any of paragraphs 1 to 6 wherein the apparatus is at least part of a base station.

### A7

Paragraph 1. A computer readable medium comprising program instructions for causing an apparatus (900) to perform
determining a duration of a gap between an uplink transmission of the apparatus (900) and a downlink transmission of another apparatus before the uplink transmission and in a channel occupancy time of the another apparatus in a case where the uplink transmission falls within the channel occupancy time; and
determining at least one of a channel access type and a cyclic prefix extension for the uplink transmission according to the duration of the gap.

### A8

Paragraph 1. A computer readable medium comprising program instructions for causing an apparatus (1100) to perform transmitting information for determining a duration of a gap between a downlink transmission of the apparatus (1100) in a channel occupancy time of the apparatus (1100) and an uplink transmission of another apparatus after the downlink transmission in a case where the uplink transmission falls within the channel occupancy time, at least one of a channel access type and a cyclic prefix extension for the uplink transmission being determined based on the duration of the gap.

## Claims

1. A method (200) comprising:
determining (210) a duration of a gap between an uplink transmission of a first apparatus and a downlink transmission of a second apparatus before the uplink transmission and in a channel occupancy time of the second apparatus in a case where the uplink transmission falls within the channel occupancy time; and
determining (220) at least one of a channel access type and a cyclic prefix extension for the uplink transmission according to the duration of the gap,
wherein the channel access type is a first type in a case where the duration of the gap is less than or equal to a first value and a duration of the uplink transmission is less than a second value, and
wherein the first type is for an immediate transmission without LBT for up to a certain period.

2. A method (800) comprising:
transmitting (810) information for determining a duration of a gap between an uplink transmission of a first apparatus and a downlink transmission of a second apparatus before the uplink transmission and in a channel occupancy time of the second apparatus in a case where the uplink transmission falls within the channel occupancy time, at least one of a channel access type and a cyclic prefix extension for the uplink transmission being determined based on the duration of the gap.

3. An apparatus (900) comprising:
at least one processor (910); and
at least one memory (920) including computer program code (930), the at least one memory (920) and the computer program code (930) being configured to, with the at least one processor (910), cause the apparatus (900) to perform:
determining a duration of a gap between an uplink transmission of the apparatus (900) and a downlink transmission of another apparatus before the uplink transmission and in a channel occupancy time of the another apparatus in a case where the uplink transmission falls within the channel occupancy time; and
determining at least one of a channel access type and a cyclic prefix extension for the uplink transmission according to the duration of the gap,
wherein the channel access type is a first type in a case where the duration of the gap is less than or equal to a first value and a duration of the uplink transmission is less than a second value, and
wherein the first type is for an immediate transmission without LBT for up to a certain period.

4. The apparatus (900) of claim 3 wherein the at least one memory (920) and the computer program code (930) are configured to, with the at least one processor (910), cause the apparatus (900) to further perform receiving information (340) for determining the duration of the gap, the information (340) including a structure of the channel occupancy time.

5. The apparatus (900) of claim 3 wherein the at least one memory (920) and the computer program code (930) are configured to, with the at least one processor (910), cause the apparatus (900) to further perform receiving information (710) for determining the duration of the gap, the information (710) including at least one of channel access type for at least one uplink transmission, gap duration for the at least one uplink transmission, a slot format indicator, channel occupancy time duration indicator, and cyclic prefix extension length for the at least one uplink transmission.

6. The apparatus (900) of claim 4 wherein the information (340) is carried on a group common physical downlink control channel.

7. The apparatus (900) of claim 4 wherein the channel access type is a second type in a case where the duration of the gap is equal to a third value.

8. The apparatus (900) of claim 3 wherein the channel access type is a fourth type in a case where the uplink transmission falls outside of the channel occupancy time, optionally wherein the fourth type is Type 1.

9. The apparatus (900) of claim 3 wherein the at least one memory (920) and the computer program code (930) are configured to, with the at least one processor (910), cause the apparatus (900) to further perform extending a cyclic prefix of the uplink transmission to reduce the duration of the gap in a case where the duration of the gap is more than a fifth value and less than a sum of the fifth value and a duration of an Orthogonal Frequency Division Multiplexing symbol.

10. The apparatus (900) of claim 3 wherein the at least one memory (920) and the computer program code (930) are configured to, with the at least one processor (910), cause the apparatus (900) to further perform dropping the uplink transmission in a case where the duration of the gap is less than or equal to a sixth value and a duration of the uplink transmission is more than a seventh value.

11. The apparatus (900) of claim 3 wherein the uplink transmission is a periodic or a semi-persistent uplink transmission.

12. An apparatus (1100) comprising:
at least one processor (1110); and
at least one memory (1120) including computer program code (1130), the at least one memory (1120) and the computer program code (1130) being configured to, with the at least one processor (1110), cause the apparatus (1110) to perform
transmitting information for determining a duration of a gap between a downlink transmission of the apparatus (1100) in a channel occupancy time of the apparatus (1100) and an uplink transmission of another apparatus after the downlink transmission in a case where the uplink transmission falls within the channel occupancy time, at least one of a channel access type and a cyclic prefix extension for the uplink transmission being determined based on the duration of the gap,
wherein the channel access type is a first type in a case where the duration of the gap is less than or equal to a first value and a duration of the uplink transmission is less than a second value, and
wherein the first type is for an immediate transmission without LBT for up to a certain period.

13. The apparatus (1100) of claim 12 wherein the information includes a structure of the channel occupancy time.

14. The apparatus (1100) of claim 12 wherein the information includes at least one of channel access type for at least one uplink transmission, gap duration for the at least one uplink transmission, a slot format indicator, channel occupancy time duration indicator, and cyclic prefix extension length for the at least one uplink transmission.

15. The apparatus (1100) of claim 13 wherein the information is transmitted via a group common physical downlink control channel.
